Europäisches Patentamt

European Patent Office

Office européen des brevets

(19)

(11) **EP 1 365 518 A1**

(12) **EUROPEAN PATENT APPLICATION**

(43) Date of publication:
**26.11.2003 Bulletin 2003/48**

(51) Int Cl.[7]: **H04B 1/707**

(21) Application number: **02011156.3**

(22) Date of filing: **21.05.2002**

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI**<br><br>(71) Applicant: **Nokia Corporation**<br>**02150 Espoo (FI)** | (72) Inventor: **Hintz-Madsen, Mads**<br>**90540 Oulu (FI)**<br><br>(74) Representative: **Cohausz & Florack**<br>**Patentanwälte**<br>**Kanzlerstrasse 8a**<br>**40472 Düsseldorf (DE)** |

(54) **Method and apparatus for synchronisation of DS-CDMA multipath signals**

(57) The invention relates to a method for obtaining a synchronization between received DS-CDMA coded multipath signals and a provided code. Signals are provided to a plurality of Rake fingers (1,2). Each of the Rake fingers correlates received signals of a multipath, associated with the respective Rake finger, with the provided code. In order to enable a reduction of interferences between the multipaths, it is proposed that for each Rake finger, an interference from signals of multipaths associated with the other Rake fingers is estimated, based on characteristics of pulse shaping filters employed by a transmitting unit and the receiving unit, on estimated propagation delays on the multipaths and on the correlation results in the Rake fingers. The method further comprises subtracting the respective estimated interference from the correlation result in the corresponding Rake finger. The invention relates equally to a corresponding software, ASIC and receiving unit.

**FIG. 1**

**Description**

FIELD OF THE INVENTION

The invention relates to a method for ensuring in a receiving unit a synchronization between received DS-CDMA (direct sequence code division multiple access) coded multipath signals and a provided corresponding code. The signals are assumed to be transmitted by a transmitting unit applying a pulse shaping filter on the signals for transmission and to be received by the receiving unit, which applies a matched pulse shaping filter on the received signals before providing them to a plurality of Rake fingers. Each of the Rake fingers is associated to a specific one of the multipaths based on a delay estimated for the propagation of signals on the respective multipath. Each of the Rake fingers moreover correlates received signals of the associated multipath with the provided code for enabling a code tracking of signals propagating on the multipath. The invention relates equally to a corresponding software, to a corresponding ASIC (Application Specific Integrated Circuit) and to a corresponding receiving unit.

BACKGROUND OF THE INVENTION

In DS-CDMA systems, a data sequence that is to be transmitted by a transmitting unit via the air interface to a receiving unit is first spread according to a unique CDMA code, which is also known at the receiving unit. The spread sequence is then transmitted using a pulse shaping filter. At the receiving unit, the received signal is subjected to a matched pulse shaping filter for reversing the pulse shaping by the transmitting unit. Thereafter, the signal can be despread again by applying the unique CDMA code, in case a synchronization between the spread signal and the code is achieved.

The signals transmitted by the transmitting unit may propagate directly to the receiving unit, but they may also be reflected at some obstacles and reach the receiving unit indirectly, resulting in a multipath propagation. The multipath signals, i.e. the signals reaching the receiving unit via different paths, are also referred to by multipath echoes or code echoes.

The signals propagating via different paths are characterized by different delays and attenuation values when reaching the receiving unit. The receiving unit may despread the signals from different multipaths separately by taking into account the different delays for a respective synchronization, and combine the despread signals coherently in order to obtain multipath diversity. To this end, different correlation receivers, so called Rake fingers, are allocated in the receiving unit to different delay positions and thus to different multipaths. Typically, each Rake finger has one code tracking device, the actual code tracking being performed after a correlation, which is employed for achieving the required synchronization. The delays can be assigned to the different Rake fingers according to different positions at which the most significant energy arrives at the receiving unit.

In addition, each Rake finger may provide early, ontime and late correlation results, in order to be able to account for deviations from the assumed delay on the path associated to the respective Rake finger. More specifically, each Rake finger correlates the received signals with the unique CDMA code using three slightly different timing offsets of the code, i.e. a timing offset slightly smaller than the assumed delay, a timing offset corresponding to the assumed delay, and a timing offset slightly larger than the assumed delay.

In case of closely spaced multipaths, however, there may be a problem in maintaining the synchronization between the received signals and the Rake fingers used for receiving the individual multipath signals. In case of closely spaced multipaths, the different paths may interfere with each other due to the employed pulse shaping filter in the transmitting units and in the receiving unit. This interference can prevent a proper synchronization and thus severely degrade the performance of code tracking algorithms. Closely spaced multipaths typically occur in indoor environments.

Conventional interference cancellation algorithms employed in DS-CDMA systems only deal with canceling interference that arises due to other users in the network, which type of interference is also referred to as MAI (Multiple Access Interference), not with canceling interference that occurs due to the pulse shaping filters.

An approach for solving the problem of interference due to closely spaced multipaths for code tracking has been presented in a paper by G. Fock, P. Schultz-Rittich, J. Baltersee and H. Meyr: "Multipath Resistant Coherent Timing-Error-Detector for DS-CDMA Applications", IEEE Sixth International Symposium on Spread Spectrum Techniques and Applications, Vol. 1, pp. 278-282, 2000. It is proposed in this paper to introduce a compensation term inside an EL TED (early late time error detector) tracking loop behind a conventional TED. This TED constitutes a standard coherent early-late delay locked loop. The compensation term is calculated using the knowledge on the combined transmit and receive filter pulse form, on the relative delays of all paths and on their respective estimated channel coefficients. This approach has the disadvantage that the employed channel estimates used for calculating the compensation term are corrupted by multipath interference, while the actual interference is dependent on the true interference-free channel coefficient for each path. Since the multipath interference cancellation is integrated into the code tracking device, the multipath interference cancellation technique presented in this document can further not be used directly with other, different code tracking devices that employ early, ontime and late correlations.

An approach for determining multipath interference-free channel estimates has been presented in the paper "A Novel Multipath Interference Cancellation Scheme for Rake Channel Estimation", IEEE Vehicular Technology Conference Proceedings, Vol. 2, pp. 1493 -1497, spring 2001, by J. Baltersee, G. Fock and P. Schultz-Rittich. It is proposed in this paper to extend a Wiener channel estimator based on a minimum mean square error (LMMSE) solution using the knowledge on the combined transmit and receive filter pulse form, on the timing estimate for all paths provided by a TED and their maximum likelihood channel estimates, in order to reduce the interferences. The LMMSE method is used for obtaining interference-free channel coefficients, and the Wiener filtering is used for obtaining interference-free channel estimates that are to be used for combining the multipath signals. This approach is not employed for code tracking, though. Further, it is rather complex, since it is based on a LMMSE method.

A third paper by G. Fock, J. Baltersee, P. Schultz-Rittich and H. Meyr: "Channel Tracking for Rake Receivers in Closely Spaced Multipath Environments", IEEE Journal on Selected Areas In Communications, Vol. 19, No. 12, pp. 2420-2431, December 2001, constitutes a combination of the first two cited papers.

## SUMMARY OF THE INVENTION

It is an object of the invention to provide an alternative possibility for ensuring in a receiving unit a synchronization between received DS-CDMA coded multipath signals and a corresponding provided code. It is in particular an object of the invention to provide such a possibility which can be realized with any kind of code tracking and which is of a limited complexity.

As mentioned in the introduction, it is assumed that the multipath signals are signals transmitted by a transmitting unit applying a pulse shaping filter on the signals for transmission. The transmitted signals are received by the receiving unit applying a matched pulse shaping filter on the received signals, before providing them to the Rake fingers. Each of the Rake fingers is associated to a specific one of the multipaths based on a delay estimated for the propagation of signals on the respective multipath. Each of the Rake fingers further correlates received signals of the associated multipath with the provided code for enabling a code tracking of signals propagating on the respective multipath.

The objects of the invention are then reached with a method, which comprises as a first step estimating for each of the Rake fingers of the receiver an interference from signals of multipaths associated to the respective other Rake fingers of the receiver. The estimation is to be based on known characteristics of the pulse shaping filters employed by the transmitting unit and the receiving unit, on the estimated propagation delays on the multipaths associated to the Rake fingers, and on the correlation results in each of the Rake fingers. As a second step, the proposed method comprises subtracting the interference estimated for a respective Rake finger from the correlation result in this Rake finger.

The objects of the invention are further reached with a corresponding receiving unit comprising a pulse shaping filter, a plurality of Rake fingers and processing means for realizing the proposed method. The objects are equally reached with a software comprising a program code for realizing the steps of the proposed method when run in a processing unit of a receiving unit. Finally, the objects of the invention are reached with an ASIC for a receiving unit comprising means for realizing the steps of the proposed method.

The invention proceeds from the idea that the considered interference resulting in closely spaced multipath signals can effectively be reduced when taking into account the measured correlations of all Rake fingers in addition to the knowledge on the pulse shaping filters and the estimated propagation delays for all Rake fingers.

Using the measured correlations enables a better multipath interference cancellation compared to using channel estimates. The purpose of a channel estimation is to estimate the amplitude and phase of a received multipath signal, while at the same time suppressing noise as much as possible in the estimates of the amplitude and phase. To this end, a filtering is usually applied to ontime correlation results. The channel estimates are used in the combining of the multipath signals, and if the channel estimates are noisy, then the combining of the signals suffers. Thus, filtering is important in determining the channel estimates. When estimating the interference for code tracking, however, it should be the aim to estimate how the different paths interfere with each other including all effects due to noise, since noise also interferes with the other paths through the pulse shaping filters. Thus, it is disadvantageous to use the channel estimates, in which noise has been suppressed, for estimating the interference. It is therefore proposed to use the measured correlations including noise for reducing the interference, instead of the estimated channel coefficients.

It is an advantage of the invention that the interference from the other received noisy multipath signals is cancelled, and not only the interference from noise-suppressed multipath signals, which are somewhat different from the received signals. The invention is thus suited to remove or suppress any interference resulting from closely spaced multipath environments from the input signals that code tracking algorithms utilize for synchronization. Thereby, the performance of code tracking algorithms can be improved significantly.

It is moreover an advantage of the invention that it can be applied with any code tracking or DLL (delay locked loop) algorithm. This is possible, since the interference cancellation is moved to the input signals, e.g. the early, ontime and late input signals, that code tracking algorithms utilize for synchronization. Any code tracking device using these input signals can thus be employed without modifications.

Preferred embodiments of the invention become apparent from the subclaims.

In preferred embodiments of the invention, the interference is estimated for each Rake finger either using a regular maximum likelihood method or a simplified maximum likelihood method. In case the estimation is based on a regular maximum likelihood method, the invention is less complex than when using an LMMSE method. In case the estimation is based on a simplified maximum likelihood method, a very low-complexity suboptimal solution can be achieved.

Advantageously, the method according to the invention is implemented as software, in particular as a low-complexity algorithm in the DSP (digital signal processor) software of a receiving unit. In this case, no special hardware is needed for the invention. The method according to the invention can be realized in particular as a Layer 1 algorithm of the receiving unit. It is to be noted, though, that the method according to the invention could equally be realized by a hardware implementation, e.g. by an ASIC hardware, as mentioned above.

The receiving unit according to the invention can be in particular a base station or a mobile terminal.

## BRIEF DESCRIPTION OF THE FIGURES

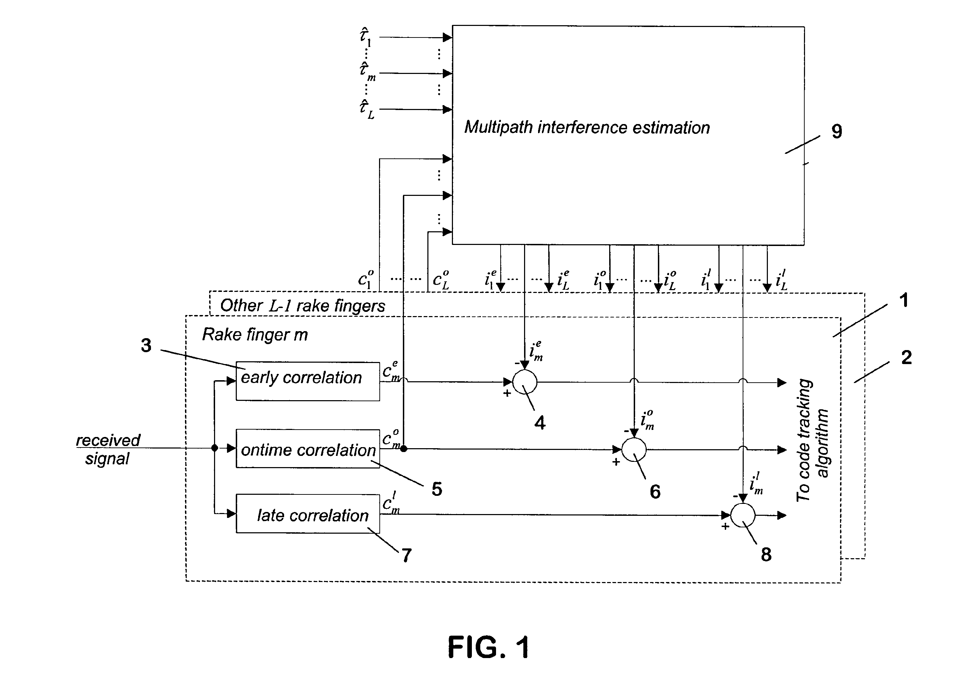

Other objects and features of the present invention will become apparent from the following detailed description considered in conjunction with the accompanying drawing. The only figure 1 is a block diagram illustrating the method according to the invention.

## DETAILED DESCRIPTION OF THE INVENTION

The block diagram of figure 1 illustrates in a generalized way a multipath interference algorithm according to the invention. Proceeding from the algorithm illustrated in figure 1, two specific embodiments of the method according to the invention will be presented.

The algorithm of figure 1 is implemented in a receiving unit of a DS-CDMA system for supporting a tracking of codes in received signals. The receiving unit can be for instance a mobile phone capable of UMTS.

In the DS-CDMA system, all user data that is to be transmitted from a transmitting unit to the receiving unit is coded in the transmitting unit with a unique spreading code. This code is also known at the receiving unit. The coded signals are then pulse shaped by a pulse shaping filter of the transmitting unit and transmitted via the air interface. The signals propagate from the transmitting unit to the receiving unit via several paths due to reflections at obstacles, i.e. via multipaths.

The receiving unit receives the multipath signals and feeds them to a pulse shaping filter matched to the filter employed by the transmitting unit. Subsequently, the implemented algorithm is applied to the multipath signals, and the outputs of the algorithm are provided to a code tracking or DLL algorithm of the receiving unit.

The receiving unit comprises L Rake fingers, which are represented in figure 1 by two rectangles 1, 2, one of the rectangles 2 being partly covered by the other rectangle 1. The rectangle in front 1 represents a selected Rake finger m, while the rectangle in the back 2 represents the other L-1 Rake fingers. The structure of the L-1 Rake fingers represented by the rectangle in the back 2 corresponds to the structure of Rake finger m. Each of the L Rake fingers is associated to another one of L multipaths on which the signals propagate between the transmitting unit and the receiving unit.

Rake finger m comprises an input for received signals which have left the pulse shaping filter of the receiving unit. In Rake finger m, the signals are provided to three separate processing paths. The first processing path comprises an early correlation 3, in which received multipaths signals are correlated with the known signal code, in order to enable a synchronization for the code tracking. The result of the correlation is provided to a summing point 4. The second path comprises a corresponding ontime correlation 5, the result of which is provided to another summing point 6, and the third path comprises a corresponding late correlation 7, the result of which is provided to yet another summing point 8. The output of each of the summing points is provided to a code tracking algorithm of Rake finger m not shown in the figure.

Figure 1 further shows a multipath interference estimation block 9. This block receives as input values the correlation value $c_1^0 \dots c_L^0$ resulting in the correlation 5 in the ontime processing path of the L Rake fingers 1, 2. In addition, block 9 receives as input values an estimated delay $\tau_1 \dots \tau_L$ for each of the L multipaths to which a Rake finger 1, 2 is associated.

The multipath interference estimation block 9 outputs a dedicated interference value $i_1^e, i_1^o, i_1^l \dots i_L^e, i_L^o, i_L^l$ for each of three processing paths 3-8 of each of the L Rake fingers 1, 2. These interference values are provided to the summing point 4, 6, 8 of the respective processing path 3-8.

In both embodiments of the invention, a received signal echo supplied to Rake finger m is correlated in each of the three processing paths 3-8 with a local copy of the unique code. For the respective correlation 3, 5, 7 in the different processing paths 3-8, however, a different timing offsets of the local copy of the unique code is used. This results in so-called early, ontime and late correlation results for Rake finger m, denoted $c_m^e$, $c_m^o$ and $c_m^l$, respectively. The timing offset used for computing the ontime correlation 5 for Rake finger m is assumed to be equal to the propagation delay on the $m^{th}$ multipath denoted $\hat{\tau}_m$, which is typically estimated by a code tracking device. When computing the early and late correlations 3, 7, the used timing offset is somewhat smaller and larger than the assumed propagation delay $\hat{\tau}_m$, respectively. The ontime correlation result $c_m^o$ is often computed in a first step of the channel estimation, which deals with the estimation of amplitude and phase of the $m^{th}$ multipath. Therefore, usually no additional complexity is required for computing the ontime correlation.

The results of the early, ontime and late correlation in each of the Rake fingers 1, 2 are falsified by the interference originating from the signals on the multipaths that the respective other Rake fingers are synchronized to. The multipath interference calculation block 9 estimates corresponding interference values $i_1^e, i_1^o, i_1^l \ldots i_L^e, i_L^o, i_L^l$ by using the knowledge of the pulse shaping filter in the transmitting unit and the receiving unit, the estimated propagation delays $\hat{\tau}_1 \ldots \hat{\tau}_L$ for all Rake fingers 1, 2 and the measured ontime correlation values $c_1^o \ldots c_L^o$ for all Rake fingers 1, 2. The estimated interference values are then subtracted in each Rake finger 1, 2 from the respective correlation values. The interference values that are to be subtracted from the results $c_m^e$, $c_m^o$ and $c_m^l$ of the early, ontime and late correlation 3, 5, 7 in finger m are denoted $i_m^e$, $i_m^o$ and $i_m^l$, respectively.

In the first presented embodiment of the method according to the invention, the interference is calculated using a maximum likelihood method.

The interference values estimated by the maximum likelihood method for the three processing paths of Rake finger m are given by the set of equations:

$$i_m^e = \sum_{\substack{l=1, \\ l \neq m}}^{L} R\left(\hat{\tau}_l - \hat{\tau}_m + \Delta\right)(\mathbf{R})_{(m,l)}^{-1} c_l^o$$

$$i_m^o = \sum_{\substack{l=1, \\ l \neq m}}^{L} R\left(\hat{\tau}_l - \hat{\tau}_m\right)(\mathbf{R})_{(m,l)}^{-1} c_l^o \qquad (1)$$

$$i_m^l = \sum_{\substack{l=1, \\ l \neq m}}^{L} R\left(\hat{\tau}_l - \hat{\tau}_m - \Delta\right)(\mathbf{R})_{(m,l)}^{-1} c_l^o$$

where $R(\cdot)$ is the autocorrelation function of the employed pulse shaping filter in the transmitting unit and the receiving unit. $\Delta$ is the time value by which the timing offset used for the computation of the early and late correlations varies from the timing offset used for the computation of the ontime correlations. $(\mathbf{R})_{(m,l)}^{-1}$ is element $(m,l)$ in the inverse matrix of

$$\mathbf{R} = \begin{bmatrix} 1 & R(\hat{\tau}_2 - \hat{\tau}_1) & \ldots & R(\hat{\tau}_L - \hat{\tau}_1) \\ R(\hat{\tau}_1 - \hat{\tau}_2) & 1 & \ldots & R(\hat{\tau}_L - \hat{\tau}_2) \\ \vdots & \vdots & \ddots & \vdots \\ R(\hat{\tau}_1 - \hat{\tau}_L) & R(\hat{\tau}_2 - \hat{\tau}_L) & \ldots & 1 \end{bmatrix} \qquad (2)$$

In the second presented embodiment of the method according to the invention, the interference is calculated using a low-complexity suboptimal method derived by simplifying the maximum likelihood method of the first presented embodiment.

The low-complexity suboptimal method is obtained by assuming that **R** is the identity matrix. This reduces the set of equations (1) used in the first presented embodiment for determining the interference values for the three processing paths of Rake finger m to:

$$i_m^e = \sum_{\substack{l=1,\\l\neq m}}^{L} R(\hat{\tau}_l - \hat{\tau}_m + \Delta)c_l^o$$

$$i_m^o = \sum_{\substack{l=1,\\l\neq m}}^{L} R(\hat{\tau}_l - \hat{\tau}_m)c_l^o \qquad\qquad (3)$$

$$i_m^l = \sum_{\substack{l=1,\\l\neq m}}^{L} R(\hat{\tau}_l - \hat{\tau}_m - \Delta)c_l^o$$

The employed denotations correspond to those employed in the set of equations (1). The advantage of a processing based on this second set of equations (3) is that no matrix inversion is required.

In the second, suboptimal embodiment of the invention, the complexity is thus reduced significantly compared to the first presented embodiment. The performance of the suboptimal method is nevertheless very close to the full maximum likelihood method and provides a significant performance gain in case of closely spaced multipaths compared to having no interference cancellation.

Thus, both presented embodiments of the method according to the invention are suited to improved the code tracking performance in environments with closely spaced multipaths.

It is to be noted that the described embodiments constitute only two of a variety of possible embodiments of the invention.

## Claims

1.  Method for ensuring in a receiving unit a synchronization between received DS-CDMA (direct sequence code division multiple access) coded multipath signals and a provided corresponding code, which signals are transmitted by a transmitting unit applying a pulse shaping filter on said signals for transmission and received by said receiving unit applying a matched pulse shaping filter on said received signals before providing them to a plurality of Rake fingers (1,2), wherein each of said Rake fingers (1,2) is associated to a specific one of said multipaths based on a delay estimated for the propagation of signals on the respective multipath, and wherein each of said Rake fingers (1,2) correlates received signals of the associated multipath with said provided code for enabling a code tracking of signals propagating on said multipath, said method comprising:

    -   estimating for each of said Rake fingers (1,2) an interference from signals of multipaths associated to the respective other Rake fingers (1,2), based on characteristics of the pulse shaping filters employed by said transmitting unit and said receiving unit, on the estimated propagation delays on the multipaths associated to said Rake fingers (1,2) and on the correlation results in each of said Rake fingers (1,2); and
    -   subtracting the interference estimated for a respective Rake finger (1,2) from the correlation result in said Rake finger (1,2).

2.  Method according to claim 1, wherein said interference is estimated for the $m^{th}$ of L Rake fingers (1,2) to be

$$i_m = \sum_{\substack{l=1,\\l\neq m}}^{L} R(\hat{\tau}_1 - \hat{\tau}_m)(\mathbf{R})_{(m,l)}^{-1} c_1 \ ,$$

where R() is the autocorrelation function of the employed pulse shaping filters in said transmitting unit and said receiving unit, where $\tau$ is the estimated delay on the multipath associated to the Rake finger (1,2) identified by the index of $\tau$, where c is the correlation result of the Rake finger (1,2) identified by the index of c, and where $(\mathbf{R})_{(m,l)}^{-1}$ is the element (m,l) in the inverse matrix of:

$$\mathbf{R} = \begin{bmatrix} 1 & R(\hat{\tau}_2 - \hat{\tau}_1) & \dots & R(\hat{\tau}_L - \hat{\tau}_1) \\ R(\hat{\tau}_1 - \hat{\tau}_2) & 1 & \dots & R(\hat{\tau}_L - \hat{\tau}_2) \\ \vdots & \vdots & \ddots & \vdots \\ R(\hat{\tau}_1 - \hat{\tau}_L) & R(\hat{\tau}_2 - \hat{\tau}_L) & \dots & 1 \end{bmatrix}.$$

3. Method according to claim 1, wherein said interference is estimated for the $m^{th}$ of L Rake fingers (1,2) to be

$$i_m = \sum_{\substack{l=1, \\ l \neq m}}^{L} R(\hat{\tau}_l - \hat{\tau}_m) c_l \; ,$$

where R() is the autocorrelation function of the employed pulse shaping filters in said transmitting unit and said receiving unit, where $\hat{\tau}$ is the estimated delay on the multipath associated to the Rake finger (1,2) identified by the index of $\tau$, and where c is the correlation result of the Rake finger (1,2) identified by the index of c.

4. Method according to claim 1, wherein each of said Rake fingers (1,2) comprises an ontime processing path (5,6) for correlating received signals with said provided code based on the estimated delay of the multipath associated to the respective Rake finger (1), an early processing path (3,4) for correlating received signals with said provided code based on the difference between the estimated delay of the multipath associated to the respective Rake finger (1) and a predetermined timing offset, and a late processing path (7,8) for correlating received signals with said provided code based on the sum of the estimated delay of the multipath associated to the respective Rake finger (1) and said predetermined timing offset, wherein said interference is estimated for each processing path (3,4;5,6;7,8) of a respective Rake finger (1) separately based on the correlation results of said ontime processing path (5,6).

5. Method according to claim 4, wherein said interference is estimated for each processing path (3,4;5,6;7,8) of the $m^{th}$ of L Rake fingers (1,2) to be

$$i_m^e = \sum_{\substack{l=1, \\ l \neq m}}^{L} R(\hat{\tau}_l - \hat{\tau}_m + \Delta)(\mathbf{R})_{(m,l)}^{-1} c_l^o$$

$$i_m^o = \sum_{\substack{l=1, \\ l \neq m}}^{L} R(\hat{\tau}_l - \hat{\tau}_m)(\mathbf{R})_{(m,l)}^{-1} c_l^o$$

$$i_m^l = \sum_{\substack{l=1, \\ l \neq m}}^{L} R(\hat{\tau}_l - \hat{\tau}_m - \Delta)(\mathbf{R})_{(m,l)}^{-1} c_l^o$$

wherein o is an index for said ontime processing path (5,6), where e is an index for said early processing path (3,4), where 1 is an index for said late processing path (7,8), where R() is the autocorrelation function of the employed pulse shaping filters in said transmitting unit and said receiving unit, where $\hat{\tau}$ is the estimated delay of the multipath associated to the Rake finger (1,2) identified by the index of $\tau$, where $\Delta$ is said predetermined timing offset, where $c^o$ is the correlation result of the ontime processing path (5,6) of the Rake finger (1,2) identified by the index of $c^o$, and where $(\mathbf{R})_{(m,l)}^{-1}$ is the element (m,l) in the inverse matrix of:

$$\mathbf{R} = \begin{bmatrix} 1 & R(\hat{\tau}_2 - \hat{\tau}_1) & \cdots & R(\hat{\tau}_L - \hat{\tau}_1) \\ R(\hat{\tau}_1 - \hat{\tau}_2) & 1 & \cdots & R(\hat{\tau}_L - \hat{\tau}_2) \\ \vdots & \vdots & \ddots & \vdots \\ R(\hat{\tau}_1 - \hat{\tau}_L) & R(\hat{\tau}_2 - \hat{\tau}_L) & \cdots & 1 \end{bmatrix}.$$

6. Method according to claim 4, wherein said interference is estimated for each processing path (3,4;5,6;7,8) of the $m^{th}$ of L Rake fingers (1,2) to be

$$i_m^e = \sum_{\substack{l=1, \\ l \neq m}}^{L} R(\hat{\tau}_l - \hat{\tau}_m + \Delta) c_l^o$$

$$i_m^o = \sum_{\substack{l=1, \\ l \neq m}}^{L} R(\hat{\tau}_l - \hat{\tau}_m) c_l^o$$

$$i_m^l = \sum_{\substack{l=1, \\ l \neq m}}^{L} R(\hat{\tau}_l - \hat{\tau}_m - \Delta) c_l^o$$

wherein o is an index for said ontime processing path (5,6), where e is an index for said early processing path (3,4), where 1 is an index for said late processing path (7,8), where R() is the autocorrelation function of the employed pulse shaping filter in said transmitting unit and said receiving unit, where $\hat{\tau}$ is the estimated delay of the multipath associated to the Rake finger (1,2) identified by the index of $\hat{\tau}$, where $\Delta$ is said predetermined timing offset, and where $c^o$ is the correlation result of the ontime processing path (5,6) of the Rake finger (1,2) corresponding to the index of $c^o$.

7. Software comprising a program code for realizing the steps of the method according to one of the preceding claims when run in a processing unit of a receiving unit.

8. ASIC (Application Specific Integrated Circuit) for a receiving unit comprising means for realizing the steps of the method according to one of claims 1 to 6.

9. Receiving unit comprising

- a pulse shaping filter matched to a pulse shaping filter of a transmitting unit for pulse shaping DS-CDMA (direct sequence code division multiple access) coded multipath signals received from said transmitting unit;
- a plurality of Rake fingers (1,2), each Rake finger (1,2) being associated to a specific one of a plurality of multipaths based on a delay estimated for the propagation of signals on the respective multipath, and each Rake finger (1,2) correlating DS-CDMA (direct sequence code division multiple access) coded signals of the associated multipath received via said pulse shaping filter with a provided code for enabling a code tracking of signals propagating on the respective multipath; and
- processing means (9) for carrying out the step of the method according to one of claims 1 to 6.

10. Receiving unit according to claim 9, which receiving unit is a base station of a mobile communication network.

11. Receiving unit according to claim 9, which receiving unit is a mobile terminal for a mobile communication network.

FIG. 1

**European Patent Office**

**EUROPEAN SEARCH REPORT**

Application Number

EP 02 01 1156

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01 05052 A (NOKIA MOBILE PHONES LTD) 18 January 2001 (2001-01-18) | 1-3,7-11 | H04B1/707 |
| Y | * abstract * * page 3, line 35 - page 5, line 25; figures 1,2 * * page 7, line 23 - line 28 * * page 9, line 5 - line 9 * --- | 4-6 | |
| Y | US 2002/044592 A1 (RAZZELL CHARLES JOHN HENDERSON) 18 April 2002 (2002-04-18) * abstract * --- | 4-6 | |
| X | WO 01 01595 A (ERICSSON INC) 4 January 2001 (2001-01-04) * page 10, line 5 - page 14, line 3; figure 4 * * figure 5 * --- | 1-3,7-11 | |
| A | ADACHI F ET AL: "Tapped delay line model for band-limited multipath channel in DS-CDMA mobile radio" ELECTRONICS LETTERS, IEE STEVENAGE, GB, vol. 37, no. 5, 1 March 2001 (2001-03-01), pages 318-319, XP006016333 ISSN: 0013-5194 * the whole document * ----- | 1-11 | TECHNICAL FIELDS SEARCHED (Int.Cl.7) H04B |

The present search report has been drawn up for all claims

| Place of search | Date of completion of the search | Examiner |
|---|---|---|
| THE HAGUE | 30 October 2002 | Ó Donnabháin, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 01 1156

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2002

| Patent document cited in search report | | Publication date | Patent family member(s) | | Publication date |
|---|---|---|---|---|---|
| WO 0105052 | A | 18-01-2001 | AU | 6207000 A | 30-01-2001 |
| | | | WO | 0105052 A1 | 18-01-2001 |
| US 2002044592 | A1 | 18-04-2002 | WO | 0219555 A2 | 07-03-2002 |
| | | | EP | 1250765 A2 | 23-10-2002 |
| | | | WO | 0219556 A2 | 07-03-2002 |
| | | | EP | 1228577 A2 | 07-08-2002 |
| WO 0101595 | A | 04-01-2001 | AU | 4998900 A | 31-01-2001 |
| | | | CN | 1371551 T | 25-09-2002 |
| | | | EP | 1197007 A1 | 17-04-2002 |
| | | | WO | 0101595 A1 | 04-01-2001 |

EPO FORM P0459

For more details about this annex : see Official Journal of the European Patent Office, No. 12/82